# EUROPEAN PATENT APPLICATION

(11) **EP 4 769 646 A1**
(43) Date of publication of application: **01.07.2026**
(21) Application number: 25867254.2
(22) Date of filing: 03.09.2025
(51) Int. Cl.: H01M 10/52, H01M 50/186, H01M 50/342, H01M 4/58, H01M 10/42, B01J 20/28, B01J 20/22

(54) **BATTERY CASE AND LITHIUM SECONDARY BATTERY COMPRISING SAME**

(30) Priority: 08.10.2024 KR 20240136745
(71) Applicant: LG ENERGY SOLUTION, LTD., Seoul 07335 (KR)
(72) Inventor: The designation of the inventor has not yet been filed
(74) Representative: BCKIP Part mbB
(86) International application number: PCT/KR2025/013614
(87) International publication number: WO 2026/079677

(57) **Abstract**

The present disclosure relates to a battery case and a lithium secondary battery including the same. The battery case includes a metal-organic framework compound that adsorbs oxygen gas and/or hydrocarbon gas in the form of a gas adsorbent or a gas adsorbing film therein, and thus can effectively remove gas generated during operation of a secondary battery. Therefore, a lithium secondary battery including the same has excellent lifespan characteristics and safety.

## Description

### [Technical Field]

The present disclosure relates to a battery case and a lithium secondary battery including the same.

This application claims the benefit of priority from Korean Patent Application No. 10-2024-0136745, filed on October 08, 2024, the entire contents disclosed therein are incorporated by reference into this disclosure.

### [Background]

Lithium secondary batteries are widely applied not only to small devices such as portable electronic devices, but also to medium and large devices such as battery packs for hybrid vehicles or electric vehicles, or power storage devices. Recently, as interest in environmental issues has grown, the demand base for high-capacity batteries is expanding following the growth of the market for devices employing high-capacity batteries, such as electric vehicles and hybrid electric vehicles, which can replace vehicles using fossil fuels, such as gasoline vehicles and diesel vehicles, which are one of the main causes of air pollution. As a power source for these devices, high-capacity design of electrodes is required for manufacturing lithium secondary batteries having high energy density, high output, and high discharge voltage.

However, as the energy density of lithium secondary batteries increases, there is a problem that the amount of gas generated inside a battery cell also increases. When the amount of gas generated inside the battery cell increases, the internal pressure of the battery cell increases, which may deform or damage a battery case. In addition, it is known that the generated gas forms a gas trap at an electrode interface, which not only interferes with electrochemical reactions in the corresponding region during charging and discharging, but also induces lithium deposition, thereby promoting deterioration of secondary battery performance.

In order to solve these problems, technologies have been developed to introduce a safety device such as a venting hole in the battery case that discharges gas when the internal pressure of a battery cell exceeds a predetermined range due to gas generated inside the battery cell, or to apply a gas adsorbing material that directly adsorbs gas to the battery cell.

However, when a safety device such as a venting hole is introduced into the battery case, electrolyte components injected into the battery case are released together with gas at high pressure during operation of the safety device, which may rather increase risks such as fire occurrence.

In addition, in the case of a gas adsorbing material introduced into the battery case, the gas adsorbing effect may be insignificant in a secondary battery designed to generate a large amount of gas during activation. Specifically, when a positive electrode additive is used in a positive electrode to compensate for lithium loss due to an irreversible reaction, a substantial amount of oxygen gas is generated during activation of a lithium secondary battery. At this time, since most of the generated oxygen gas is adsorbed to a gas adsorbing material introduced inside the battery cell, there is difficulty for the gas adsorbing material to adsorb gas generated after activation.

Therefore, development of a technology that can stably absorb gas generated inside a secondary battery for a long period of time even when a large amount of gas is generated during activation is required.

### [Related Art Document]

Japanese Laid-Open Patent Publication No. 2018-530878
Korean Laid-Open Patent Publication No. 10-2023-0154747

### [Summary]

### [Technical Problem]

An object of the present disclosure is to provide a battery case that can stably adsorb gas generated inside a secondary battery for a long period of time without limitation on materials applied to the secondary battery, and a secondary battery including the same.

### [Technical Solution]

To solve the above-described problem,
the present disclosure provides a battery case including:
a first accommodating portion for accommodating an electrode assembly;
a second accommodating portion in which a gas adsorbent including a first gas adsorbing material is disposed; and
a sealing portion located at outer peripheries of the first accommodating portion and the second accommodating portion to seal the interior,
wherein the first accommodating portion includes a gas adsorbing film provided on an inner surface along the sealing portion and including a second gas adsorbing material, and
wherein the first gas adsorbing material and the second gas adsorbing material each include a metal-organic framework compound.

The sealing portion may be divided into a first direction sealing portion through which an electrode lead bonded to an electrode assembly passes, and a second direction sealing portion perpendicular to the first direction sealing portion, and the gas adsorbing film may be located in a terrace region of the first accommodating portion along the first direction sealing portion.

The sealing portion may be divided into a first direction sealing portion through which an electrode lead bonded to an electrode assembly passes, and a second direction sealing portion perpendicular to the first direction sealing portion, and the gas adsorbing film may be located on an inner surface of the first accommodating portion along the second direction sealing portion.

In this case, at least one venting hole may be provided in the second direction sealing portion, and the venting hole may be located in a central region of the second direction sealing portion.

The first gas adsorbing material and the second gas adsorbing material may each be a metal-organic framework compound including one or more metal of zinc (Zn), silver (Ag), cobalt (Co), copper (Cu), nickel (Ni), magnesium (Mg), zirconium (Zr), molybdenum (Mo), and iron (Fe).

For example, the first gas adsorbing material and the second gas adsorbing material may each include one or more metal-organic framework compound of Zn-MOF-5, Co-MOF-74, Fe-MOF-74, Ni-MOF-74, Mg-MOF-74, Zn-MOF-177, Mg-MOF-177, Zn-ZIF-8, ZnDABCO, Fe-ncb-ABDC, Cu(Qc)₂, Al-BTC, Cr-BTC, and Cu-BTC.

In addition, the first gas adsorbing material and the second gas adsorbing material may each include an oxygen adsorbing metal-organic framework compound that adsorbs oxygen gas in a range of 1 mmol/g to 50 mmol/g under conditions of 25°C and 1 bar oxygen partial pressure, and a hydrocarbon adsorbing metal-organic framework compound that adsorbs methane gas in a range of 1 mmol/g to 50 mmol/g under conditions of 25°C and 35 bar methane partial pressure.

In this case, the first gas adsorbing material may include 50 wt.% to 100 wt.% of an oxygen adsorbing metal-organic framework compound based on the total weight.

In addition, the second gas adsorbing material may include 50 wt.% to 100 wt.% of a hydrocarbon adsorbing metal-organic framework compound based on the total weight.

The average thickness of the gas adsorbing film may be in a range of 10 µm to 500 µm.

The present disclosure provides a secondary battery including:
an electrode assembly including a positive electrode, a negative electrode, and a separator disposed between the positive electrode and the negative electrode;
an electrolyte composition impregnating the electrode assembly; and
the battery case in which the electrode assembly and the electrolyte composition are accommodated.

The positive electrode may include a positive electrode active layer including a positive electrode active material and a positive electrode additive on at least one surface of a positive electrode current collector, and the positive electrode additive may include one or more compound represented by the following Chemical Formulas 1 to 3:

[Chemical Formula 1] LiₐM¹₍1₋b₎M²_{b}O₄

[Chemical Formula 2] Li₂M³(₁₋ₚ)M⁴ₚO₂

[Chemical Formula 3] Li₂R_{q}

In Chemical Formulas 1 to 3,
wherein M¹ is Fe, Co, Mn, Zn, Al, or Ga,
wherein M² is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M¹ and M² include different metals,
wherein M³ is Ni or Cu,
wherein M⁴ is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ include different metals,
wherein R is O, S, or Se, and
wherein a, b, p, and q are 4≤a≤7, 0≤b≤0.5, 0≤p≤0.5, and 0.8≤q≤2.5, respectively.

For example, the positive electrode additive may include one or more compound of Li₅FeO₄, Li₆MnO₄, Li₆CoO₄, Li₆ZnO₄, Li₅AlO₄, Li₅GaO₄, Li₂NiO₂, Li₂CuO₂, Li₂O, Li₂O₂, Li₂S, and Li₂Se.

The positive electrode additive may be included in an amount of 0.1 wt.% to 5 wt.% based on the total weight of the positive electrode active layer.

The positive electrode active material may include a lithium iron phosphate compound represented by the following Chemical Formula 4:

[Chemical Formula 4] LiFeᵣM⁵₍₁₋ᵣ₎XO₄

In Chemical Formula 4,
wherein M⁵ is one or more element of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
wherein X is one or more of P, Si, S, As, and Sb, and
wherein r is 0≤r≤0.5.

### [Advantageous Effects]

A battery case according to the present disclosure includes a metal-organic framework compound that adsorbs oxygen gas and/or hydrocarbon gas in the form of a gas adsorbent or a gas adsorbing film therein, and thus can effectively remove gas generated during operation of a secondary battery for a long period of time. Therefore, a lithium secondary battery including the same has excellent lifespan characteristics and safety.

### [Brief Description of the Drawings]

FIG. 1 is a perspective view illustrating a battery case according to the present disclosure.
FIG. 2 is a plan view illustrating a structure of a battery case according to the present disclosure.

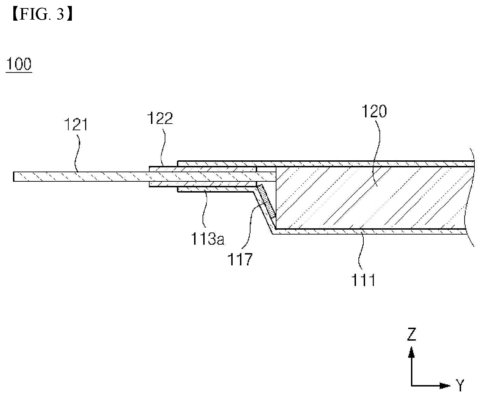

FIG. 3 is a cross-sectional view illustrating a configuration of a secondary battery according to the present disclosure.

### [Detailed Description]

The present disclosure may have various modifications and various embodiments, and specific embodiments will be described in detail in the following detailed description.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In the present specification, the "first direction" of the first direction sealing portion may refer to a direction (X-axis direction) perpendicular to a direction in which an electrode lead is drawn out to an exterior of a battery case, and the "second direction" of the second direction sealing portion may refer to a direction (Y-axis direction) perpendicular to the first direction.

Hereinafter, the present disclosure will be described in more detail.

### Battery Case

The present disclosure provides a battery case including:
a first accommodating portion for accommodating an electrode assembly;
a second accommodating portion in which a gas adsorbent including a first gas adsorbing material is disposed; and
a sealing portion located at outer peripheries of the first accommodating portion and the second accommodating portion to seal the interior,
wherein the first accommodating portion includes a gas adsorbing film provided on an inner surface along the sealing portion and including a second gas adsorbing material.

A battery case according to the present disclosure is a battery case for a secondary battery, and specifically, can be usefully applied to a lithium secondary battery.

The battery case may be provided in the form of a multilayer film structure including an outer layer for protecting against external impact, a metal barrier layer for blocking moisture, and a sealant layer for sealing the case.

The outer layer may include a polyester-based film using poly(ethylene terephthalate) (PET), polybutylene terephthalate, polyethylene naphthalate, polybutylene naphthalate, copolymerized polyester, polycarbonate, nylon, or the like, and may be composed of a single layer or multiple layers.

The metal barrier layer may include aluminum, copper, or the like.

The sealant layer may include a sealant resin and may be composed of a single layer or multiple layers. In this case, the sealant resin may include polypropylene (PP), acid modified polypropylene (PPa), random polypropylene, an ethylene-propylene copolymer, or two or more thereof. The ethylene-propylene copolymer may include ethylene-propylene rubber, an ethylene-propylene block copolymer, or the like, but is not limited thereto.

The battery case according to the present disclosure has a form that can implement a pouch shape when sealing an electrode assembly. In addition, the battery case may have a structure for adsorbing gas generated during charging and discharging of a secondary battery while providing a space for accommodating an electrode assembly.

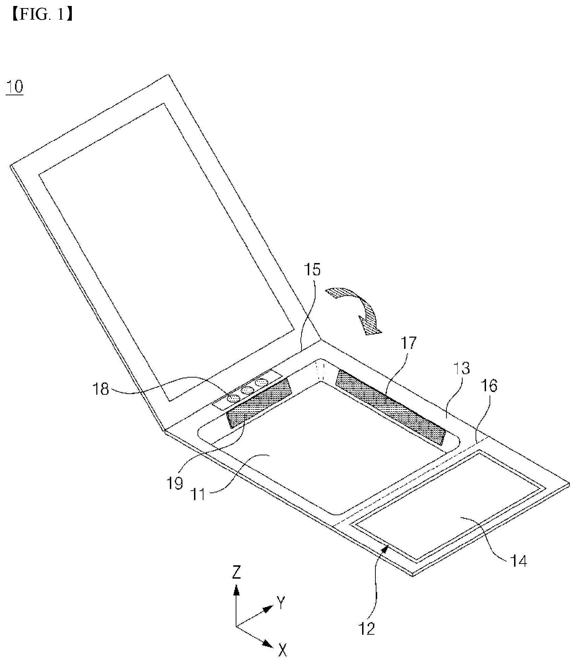

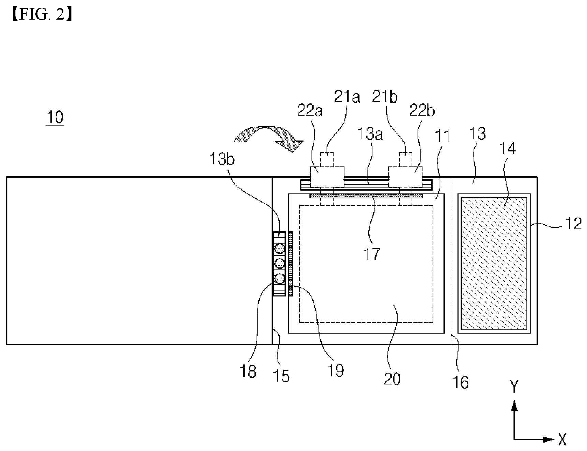

Specifically, FIG. 1 and FIG. 2 are a perspective view and a plan view illustrating a structure of a battery case according to the present disclosure. Referring to FIG. 1 and FIG. 2, the battery case 10 may include a lower case including a first accommodating portion 11 for accommodating an electrode assembly 20, and an upper case folded along a folding line 15 to seal the lower case.

The lower case includes a first accommodating portion 11 for accommodating an electrode assembly 20, a second accommodating portion 12 in which a gas adsorbent 14 including a first gas adsorbing material is disposed, and a sealing portion 13 located at outer peripheries of the first accommodating portion and the second accommodating portion to seal the interior.

The second accommodating portion 12 is connected to the first accommodating portion 11 in which an electrode assembly is accommodated, and may perform a function of a "gas pocket portion" that collects gas generated during activation of a secondary battery. A gas adsorbent 14 accommodated in the second accommodating portion 12 may perform a function of adsorbing gas such as oxygen (O₂) generated during activation of a secondary battery.

The gas adsorbent 14 may include a first gas adsorbing material as a main component, and may further include a binder for fixing the first gas adsorbing material. For example, the gas adsorbent 14 may include a first gas adsorbing material and a binder in a weight ratio of 60 to 99:1 to 40, or 60 to 80:20 to 40.

As a binder of the gas adsorbent 14, a polyolefin resin including polyethylene, polypropylene, an ethylene-propylene copolymer, or the like may be used. The polyolefin resin has an advantage of having excellent fixing force for a first gas adsorbing material and having significantly fewer side reactions with an electrolyte composition to be injected into a battery case.

In addition, the gas adsorbent 14 may be applied without particular limitation as long as it is in a form that can be accommodated in the second accommodating portion 12, but preferably, may have the same form as the second accommodating portion 12 so as to completely fill the second accommodating portion 12.

The second accommodating portion 12 may be removed after activation of a secondary battery as described above. For this, the battery case may include a cutting line 16 for removing the second accommodating portion 12 between the first accommodating portion 11 and the second accommodating portion 12.

The first accommodating portion 11 provides a space for accommodating an electrode assembly, and gas adsorbing films 17 and 19 for adsorbing gas generated inside during charging and discharging of a secondary battery may be introduced on an inner surface thereof. The gas adsorbing films 17 and 19 may perform a function of adsorbing gas generated inside during charging and discharging after activation of a secondary battery by including a second gas adsorbing material. For this, the gas adsorbing films 17 and 19 may be introduced on an inner surface of the first accommodating portion 11 and may be provided along a sealing portion 13 forming an outer periphery of the first accommodating portion 11.

Specifically, the gas adsorbing films 17 and 19 may be introduced on an inner surface of the first accommodating portion 11 along the sealing portion 13, and may be provided in a region where changes in internal pressure due to gas generated inside are large and fast.

For example, when the sealing portion 13 is divided into a first direction sealing portion through which electrode leads 21a and 21b bonded to an electrode assembly 20 pass and a second direction sealing portion perpendicular to the first direction sealing portion, the gas adsorbing film 17 may be located in a terrace region of the first accommodating portion 11 along the first direction sealing portion 13a. In a secondary battery, a terrace region means an internal space on a side from which electrode leads 21a and 21b are drawn out among inner surfaces of a first accommodating portion 11 in which an electrode assembly 20 is accommodated. Since this region corresponds to a region where changes in pressure due to gas generated inside are large and fast among all regions of a secondary battery, a gas adsorbing film 17 provided in the corresponding region exhibits high gas adsorbing efficiency. In addition, the terrace region includes a dead space formed between an end of an electrode assembly 20 and an inner surface of a first accommodating portion 11 along a first direction sealing portion 13a. In the dead space, the ratio of gas generated inside being collected and trapped is high. Therefore, disposing the gas adsorbing film 17 in a terrace region of a first accommodating portion may not only prevent gas trapping, but also be advantageous in terms of space utilization of a secondary battery.

In addition, when the sealing portion 13 is divided into a first direction sealing portion through which electrode leads 21a and 21b bonded to an electrode assembly 20 pass and the second direction sealing portion perpendicular to the first direction sealing portion, the gas adsorbing film 19 may be located on an inner surface of a first accommodating portion along a second direction sealing portion. In this case, the second direction sealing portion may include at least one venting hole 18, and the venting hole 18 may be located in a central region 13b of the second direction sealing portion. Since pressure increased due to gas generated inside a secondary battery induces explosion of a secondary battery, a venting means such as a venting hole 18 may be included in a battery case 10 to prevent this. The venting means may be provided in a sealing portion 13 of a battery case 10, particularly in the central region 13b of the second direction sealing portion spaced apart from a terrace region. In the central region 13b of the second direction sealing portion, pressure due to expansion of a battery case and/or pressure due to internal gas may act strongly. Therefore, when a gas adsorbing film 19 is disposed in the corresponding region 13b, excellent gas adsorbing efficiency may be exhibited.

Furthermore, the gas adsorbing films 17 and/or 19 may be provided in the first direction sealing portion 13a adjacent to a terrace region and/or in the central region 13b where a venting hole 18 is formed in the second direction sealing portion. In this case, since the gas adsorbing film 19 is located within the first direction sealing portion and/or the second direction sealing portion, there is an advantage of being able to implement a high energy density of a manufactured secondary battery while maintaining a high amount of gas adsorbed per unit area.

The gas adsorbing films 17 and 19 may include a second gas adsorbing material as a main component, and may further include a resin for dispersing/fixing the second gas adsorbing material. For example, the gas adsorbing films 17 and 19 may include a second gas adsorbing material and a resin in a weight ratio of 1 to 60:40 to 99, or 10 to 40:60 to 90.

As a resin of the gas adsorbing films 17 and 19, a polyolefin resin including polyethylene, polypropylene, an ethylene-propylene copolymer, or the like may be used. The polyolefin resin has advantages of having excellent adhesive force with a sealant layer corresponding to an inner layer of a battery case and having significantly less side reactions with an electrolyte composition to be injected into a battery case.

The gas adsorbing film may be introduced into a battery case with a predetermined thickness. As the thickness of the gas adsorbing film increases, the amount of adsorbed gas may increase. However, when the thickness is excessive, moldability of a battery case may decrease. Therefore, an average thickness of the gas adsorbing film may be controlled in a range of 10 µm to 500 µm. Specifically, an average thickness of the gas adsorbing film may be controlled in a range of 10 µm to 250 µm, 10 µm to 100 µm, 50 µm to 500 µm, 100 µm to 500 µm, 250 µm to 500 µm, 100 µm to 300 µm, 200 µm to 400 µm, 150 µm to 400 µm, 50 µm to 190 µm, or 20 µm to 90 µm.

Meanwhile, the first gas adsorbing material of the gas adsorbent 14 and the second gas adsorbing material of the gas adsorbing films 17 and 19 may include a specific compound to effectively adsorb internal gas without generating side reactions inside a secondary battery. Specifically, the first gas adsorbing material and the second gas adsorbing material may each include a metal-organic framework compound.

A Metal-Organic Framework compound (MOF compound) is a crystalline solid material and refers to a porous material having a one-dimensional, two-dimensional, or three-dimensional structure formed by coordinately bonding metal clusters and organic ligands to each other in a chain. Such metal-organic framework compounds are structurally very stable to heat and have a high surface area, so there is an advantage that gas can be easily physically adsorbed. Since the form, size, and/or binding energy condition of a site to which gas is physically adsorbed vary depending on a type of metal forming a coordinate bond and/or a type of organic ligand in a metal-organic framework compound, a type of gas to be adsorbed may be different depending on a type of metal-organic framework compound. Accordingly, the battery case 10 according to the present disclosure may include metal-organic framework compounds as a first gas adsorbing material and a second gas adsorbing material, respectively, and may be the same or different in type.

Specifically, the first gas adsorbing material and the second gas adsorbing material may each include a metal-organic framework compound including one or more metal of zinc (Zn), silver (Ag), cobalt (Co), copper (Cu), nickel (Ni), magnesium (Mg), zirconium (Zr), molybdenum (Mo), and iron (Fe).

For example, the first gas adsorbing material and the second gas adsorbing material may each include one or more metal-organic framework compound of Zn-MOF-5, Co-MOF-74, Fe-MOF-74, Ni-MOF-74, Mg-MOF-74, Zn-MOF-177, Mg-MOF-177, Zn-ZIF-8, Zn-DABCO, Fe-ncb-ABDC, Cu(Qc)₂, Al-BTC, Cr-BTC, and Cu-BTC.

Here, the M-MOF-5 means a metal (M) compound including 1,4-benzodicarboxylate (BDC) as a ligand, the M-MOF-74 means a metal (M) compound including dihydroxyterephthalic acid as a ligand, the M-MOF-177 means a metal (M) compound including 1,3,5-benzenetribenzoate (BTB) as a ligand, the ZIF-8 means a metal (M) compound including 2-methylimidazole as a ligand, and the Zn-DABCO means a zinc compound including 1,4-diazabicyclo[2.2.2]octane as a ligand.

In addition, Fe-ncb-ABDC means an iron compound including azobenzene-4,4'-dicarboxylate (ABDC) as a ligand and in which metals and ligands are arranged in a three-dimensional nine-connected born (ncb).

The Cu(Qc)₂ means a copper compound including quinoline-5-carboxylate (Qc) as a ligand.

The M-BTC means a metal (M) compound having 1,3,5-benzotricarboxylate (BTC) as a ligand.

The metal-organic framework compound has a large specific surface area and has a feature of having excellent adsorbing force for gases such as oxygen (O₂), methane (CH₄), ethane (CH₃CH₃), propane (CH₃CH₂CH₃), butane (CH₃CH₂CH₂CH₃), ethene (CH₂CH₂), and the like, carbon monoxide (CO), carbon dioxide (CO₂), and the like.

In addition, the first gas adsorbing material and the second gas adsorbing material may include two or more metal-organic framework compounds to control types of adsorbed gas when activating a secondary battery and when charging and discharging after activation. In this case, two or more metal-organic framework compounds may aim to adsorb different types of gas. Specifically, the first gas adsorbing material and the second gas adsorbing material may each include two or more metal-organic framework compounds having excellent efficiency in adsorbing oxygen (O₂) and/or hydrocarbons.

For example, the first gas adsorbing material and the second gas adsorbing material may each include an oxygen adsorbing metal-organic framework compound that adsorbs oxygen gas in a range of 1 mmol/g to 50 mmol/g under conditions of 25°C and 1 bar oxygen partial pressure, and a hydrocarbon adsorbing metal-organic framework compound that adsorbs methane gas in a range of 1 mmol/g to 50 mmol/g under conditions of 25°C and 35 bar methane partial pressure. The gas adsorption amount may be measured by a volumetric method.

Generally, various types of gas such as oxygen (O₂), hydrocarbons, carbon monoxide (CO), carbon dioxide (CO₂), and the like are generated during charging and discharging of a secondary battery, and types of gas generated may be somewhat different depending on a time point at which charging and discharging are performed. For example, when a positive electrode includes a positive electrode additive containing excess lithium, oxygen (O₂) occupies about 60% to 65% of gas generated during activation of a secondary battery. On the other hand, even in the same secondary battery, hydrocarbons occupy about 50% or more of gas generated during charging and discharging after activation. Accordingly, the present disclosure may include, as the first gas adsorbing material and the second gas adsorbing material, an oxygen adsorbing metal-organic framework compound having excellent adsorbing ability for oxygen (O₂) and a hydrocarbon adsorbing metal-organic framework compound having excellent adsorbing ability for hydrocarbons.

The oxygen adsorbing metal-organic framework compound may adsorb oxygen gas in a range of 1 mmol/g to 50 mmol/g under conditions of 25°C and 1 bar oxygen partial pressure. Specifically, the oxygen adsorbing metal-organic framework compound may adsorb oxygen gas in a range of 1 mmol/g to 40 mmol/g, 1 mmol/g to 30 mmol/g, 1 mmol/g to 20 mmol/g, 1 mmol/g to 10 mmol/g, 5 mmol/g to 15 mmol/g, 10 mmol/g to 30 mmol/g, 20 mmol/g to 40 mmol/g, 25 mmol/g to 50 mmol/g, 15 mmol/g to 45 mmol/g, 1 mmol/g to 9 mmol/g, 1 mmol/g to 5 mmol/g, or 11 mmol/g to 19 mmol/g under conditions of 25°C and 1 bar oxygen partial pressure.

Examples of such oxygen adsorbing metal-organic framework compounds include Co-MOF-74, Fe-MOF-74, Ni-MOF-74, Mg-MOF-74, Zn-ZIF-8, Cu(Qc)₂, Cu-BTC, Cr-BTC, and the like.

In addition, the hydrocarbon adsorbing metal-organic framework compound may adsorb methane gas in a range of 1 mmol/g to 50 mmol/g under conditions of 25°C and 35 bar methane partial pressure. Specifically, the hydrocarbon adsorbing metal-organic framework compound may adsorb methane gas in a range of 1 mmol/g to 40 mmol/g, 1 mmol/g to 30 mmol/g, 1 mmol/g to 20 mmol/g, 1 mmol/g to 10 mmol/g, 5 mmol/g to 15 mmol/g, 10 mmol/g to 30 mmol/g, 20 mmol/g to 40 mmol/g, 25 mmol/g to 50 mmol/g, 15 mmol/g to 45 mmol/g, 1 mmol/g to 9 mmol/g, 1 mmol/g to 5 mmol/g, or 11 mmol/g to 19 mmol/g under conditions of 25°C and 35 bar methane partial pressure.

Examples of such hydrocarbon adsorbing metal-organic framework compounds include Zn-MOF-5, Co-MOF-74, Ni-MOF-74, Mg-MOF-74, Zn-MOF-177, Mg-MOF-177, Zn-DABCO, Fe-ncb-ABDC, Al-BTC, Cu-BTC, and the like.

The present disclosure may effectively adsorb and remove a substantial amount of gas generated during charging and discharging of a secondary battery by including a metal-organic framework compound that adsorbs oxygen or methane gas in the above-described range.

In addition, the first gas adsorbing material and the second gas adsorbing material may each include an oxygen adsorbing metal-organic framework compound and a hydrocarbon adsorbing metal-organic framework compound, and may have different content ratios thereof.

Specifically, the first gas adsorbing material is disposed in a second accommodating portion in the form of a gas adsorbent. The second accommodating portion may perform a function of a "gas pocket portion" that collects gas generated during activation of a secondary battery and is removed after activation. Therefore, the first gas adsorbing material may include 50 wt.% to 100 wt.% of an oxygen adsorbing metal-organic framework compound based on the total weight so that a gas adsorbent accommodated in a second accommodating portion can adsorb oxygen (O₂) generated during activation of a secondary battery at a high ratio. For example, the first gas adsorbing material may include an oxygen adsorbing metal-organic framework compound in a range of 50 wt.% to 90 wt.%, 50 wt.% to 80 wt.%, 50 wt.% to 75 wt.%, 50 wt.% to 70 wt.%, 60 wt.% to 90 wt.%, 70 wt.% to 90 wt.%, 75 wt.% to 95 wt.%, 65 wt.% to 75 wt.%, or 55 wt.% to 65 wt.% based on the total weight. In this case, the remainder of the first gas adsorbing material may include a hydrocarbon adsorbing metal-organic framework compound.

In addition, the second gas adsorbing material is included in a gas adsorbing film and is introduced on an inner surface of a first accommodating portion of a battery case in which an electrode assembly is accommodated along a sealing portion. Therefore, the second gas adsorbing material may include a metal-organic framework compound having excellent adsorbing ability for hydrocarbons at a high ratio so as to adsorb gas generated during charging and discharging after activation of a secondary battery. Specifically, the second gas adsorbing material may include 50 wt.% to 100 wt.% of a hydrocarbon adsorbing metal-organic framework compound based on the total weight. For example, the second gas adsorbing material may include a hydrocarbon adsorbing metal-organic framework compound in a range of 50 wt.% to 90 wt.%, 50 wt.% to 80 wt.%, 50 wt.% to 75 wt.%, 50 wt.% to 70 wt.%, 60 wt.% to 90 wt.%, 70 wt.% to 90 wt.%, 75 wt.% to 95 wt.%, 65 wt.% to 75 wt.%, or 55 wt.% to 65 wt.% based on the total weight. In this case, a remainder of the second gas adsorbing material may include an oxygen adsorbing metal-organic framework compound.

The present disclosure may effectively remove not only gas generated during activation of a secondary battery but also gas generated after activation by controlling a composition of metal-organic framework compounds included in a first gas adsorbing material and a second gas adsorbing material within the above-described range.

The battery case according to the present disclosure, by having the above-described configuration, can effectively adsorb and remove gas generated during charging and discharging of a secondary battery for a long period of time. In addition, since the battery case can selectively adsorb and remove gas generated during activation and after activation of a secondary battery, respectively, there is an advantage that there is no limitation on materials applied to a secondary battery.

### Lithium Secondary Battery

The present disclosure provides a secondary battery including:
an electrode assembly including a positive electrode, a negative electrode, and a separator disposed between the positive electrode and the negative electrode;
an electrolyte composition impregnating the electrode assembly; and
the battery case of the present disclosure described above in which the electrode assembly and the electrolyte composition are accommodated.

The secondary battery according to the present disclosure may be a lithium secondary battery. Since the lithium secondary battery includes the battery case according to the present disclosure and can effectively remove gas generated during charging and discharging of the secondary battery, there is an advantage of excellent safety. In addition, since the lithium secondary battery includes a positive electrode including a positive electrode additive for supplementing lithium lost during activation, there is an advantage of excellent charge/discharge capacity and lifespan characteristics.

Specifically, the secondary battery includes the battery case of the present disclosure described above. Since the battery case has the same configuration as described above, a detailed description thereof will be omitted.

The electrode assembly has a structure in which a positive electrode, a negative electrode, and a separator located between the positive electrode and the negative electrode to insulate the positive electrode and the negative electrode are interposed, and may have a stacked type, a stack-folding type, or a form wound in a jelly-roll shape. An electrode assembly of this form exhibits high energy density in a limited space, and thus has an advantage of high utilization in terms of energy density or output of a secondary battery.

The electrode assembly may have a built-in structure in a state of being connected to respective leads of a positive electrode and a negative electrode formed outside a pouch case. Specifically, the positive electrode lead and the negative electrode lead may be formed to extend from inside to outside of a pouch case.

Meanwhile, the positive electrode lead and the negative electrode lead may be drawn out to an outside of a pouch case and may have a structure extending in the same direction or opposite directions to each other. In the drawings, the positive electrode lead and the negative electrode lead are illustrated as a structure extending in opposite directions to each other, but are not limited thereto.

The positive electrode includes a positive electrode active layer including a positive electrode active material and a positive electrode additive on at least one surface of a positive electrode current collector. The positive electrode additive includes one or more compound represented by the following Chemical Formulas 1 to 3:

[Chemical Formula 1] LiₐM¹_{(1-b)}M²_{b}O₄

[Chemical Formula 2] Li₂M³₍₁₋ₚ₎M⁴ₚO₂

[Chemical Formula 3] Li₂R_{q}

In Chemical Formulas 1 to 3,
wherein M¹ is Fe, Co, Mn, Zn, Al, or Ga,
wherein M² is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M¹ and M² include different metals,
wherein M³ is Ni or Cu,
wherein M⁴ is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ include different metals,
wherein R is O, S, or Se, and
wherein a, b, p, and q are 4≤a≤7, 0≤b≤0.5, 0≤p≤0.5, and 0.8≤q≤2.5, respectively.

The positive electrode additive contains excess lithium and can provide lithium to lithium consumption caused by irreversible chemical and physical reactions in a negative electrode during initial charging. In addition, the positive electrode and the secondary battery including the same may have improved lifespan characteristics by increasing charge capacity and decreasing irreversible capacity of a battery.

As such a positive electrode additive, the present disclosure may include one or more of over-lithiated compounds represented by Chemical Formulas 1 to 3. In this case, a compound represented by Chemical Formula 1 may include Li₆CoO₄, Li₆Co_{0.5}Zn_{0.5}O₄, Li₆Co_{0.7}Zn_{0.3}O₄, Li₆Co_{0.7}Zn_{0.2}Al_{0.1}O₄, Li₅FeO₄, Li₆MnO₄, Li₆ZnO₄, Li₅AlO₄, Li₅GaO₄, and the like. In addition, a compound represented by Chemical Formula 2 may include Li₂NiO₂, Li₂CuO₂, and the like, and a compound represented by Chemical Formula 3 may include Li₂O₂, Li₂O, Li₂S, Li₂Se, and the like.

The content of the positive electrode additive may be 0.1 parts by weight to 5 parts by weight based on 100 parts by weight of an entire positive electrode active layer, and specifically, may be 0.1 parts by weight to 3 parts by weight; 0.1 parts by weight to 2 parts by weight; 1 part by weight to 3 parts by weight; 0.1 parts by weight to 1 part by weight; 1 part by weight to 3 parts by weight; 1 part by weight to 2 parts by weight; or 0.1 parts by weight to 0.9 parts by weight. The present disclosure can prevent deterioration of charge and discharge capacity due to insufficient supplementation of lithium ions lost by an irreversible reaction due to a low content of the positive electrode additive by controlling the content of the positive electrode additive within the above range. In addition, generation of a large amount of oxygen gas during charging and discharging of a secondary battery due to an excessive positive electrode additive can be prevented.

The positive electrode additive may include a coating layer on the surface, and the coating layer may be a carbon coating layer or a conductive polymer layer. The carbon coating layer may be formed by carbonizing an organic solvent remaining on a surface during preparation of a positive electrode additive; or by separately treating glucose, sucrose, galactose, fructose, lactose, starch, mannose, ribose, aldohexose, ketohexose, or a mixture thereof and then carbonizing. In some cases, the coating layer may be formed by mixing a positive electrode additive with a carbon material such as graphite, graphene, carbon nanotubes (CNT), and the like, and then heat-treating.

In addition, the conductive polymer layer may be formed by mixing 1 part by weight to 10 parts by weight of a conductive polymer, such as polyaniline, polythiophene, polypyrrole, or a copolymer thereof, based on 100 parts by weight of the positive electrode additive, and drying.

The average thickness of the coating layer may be 20 nm or less, and specifically, may be 5 nm to 15 nm or 7 nm to 12 nm.

The positive electrode active material is a material capable of electrochemically causing a reaction, and may include a lithium iron phosphate compound represented by the following Chemical Formula 4 capable of reversibly intercalating and deintercalating lithium ions:

[Chemical Formula 4] LiFeᵣM⁵₍₁₋ᵣ₎XO₄

In Chemical Formula 4,
wherein M⁵ is one or more element of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
wherein X is one or more of P, Si, S, As, and Sb, and
wherein r is 0≤r≤0.5.

The lithium iron phosphate compound represented by Chemical Formula 4 is a promising active material having an olivin structure and having the most excellent structural stability, and thus having excellent lifespan characteristics and excellent safety in all aspects including overcharge and overdischarge. In particular, the lithium iron phosphate compound has excellent high-temperature stability due to strong bonding force of PO₄⁻, and also includes iron which is abundant and inexpensive as a resource, and thus is less expensive than the above-described LiCoO₂, LiNiO₂, or LiMn₂O₄, and has low toxicity, so an impact on the environment is also small.

Such a lithium iron phosphate compound represented by Chemical Formula 4 is a lithium phosphate oxide including iron, and in some cases, may have a form doped with another transition metal (M1). For example, the lithium iron phosphate compound may include LiFePO₄, LiFe_{0.8}Mn_{0.2}PO₄, LiFe_{0.5}Mn_{0.5}PO₄, LiFe_{0.3}Mn_{0.7}PO₄, and the like.

The positive electrode active layer may further include a conductive material, a binder, other additives, and the like together with a positive electrode active material.

The conductive material is used to improve electrical performance of a positive electrode, and those commonly used in the art may be applied. Specifically, the conductive material may include one or more of natural graphite; artificial graphite; carbon blacks such as acetylene black, furnace black, lamp black, and thermal black; graphene; and carbon nanotubes.

The conductive material may be included in 0.1 parts by weight to 5 parts by weight based on 100 parts by weight of a positive electrode active layer. Specifically, the conductive material may be included in 0.1 parts by weight to 4 parts by weight; 2 parts by weight to 4 parts by weight; 1.5 parts by weight to 5 parts by weight; 1 part by weight to 3 parts by weight; 0.1 parts by weight to 2 parts by weight; or 0.1 parts by weight to 1 part by weight based on 100 parts by weight of a positive electrode active layer.

The binder serves to bind a positive electrode active material, a positive electrode additive, and a conductive material to each other, and may be used without particular limitation as long as it has such a function. Specifically, the binder may include one or more resin of polyvinylidene fluoride-hexafluoropropylene copolymer (PVdF-co-HFP), polyvinylidenefluoride (PVdF), polyacrylonitrile, polymethylmethacrylate, and copolymers thereof. For example, the binder may include polyvinylidenefluoride.

The binder may be included in 1 part by weight to 10 parts by weight based on 100 parts by weight of a positive electrode active layer. Specifically, the binder may be included in 2 parts by weight to 8 parts by weight; or 1 part by weight to 5 parts by weight based on 100 parts by weight of the positive electrode active layer.

The total thickness of the positive electrode active layer is not particularly limited, but specifically, may be in a range of 50 µm to 300 µm, and more specifically, may be in a range of 100 µm to 200 µm; 80 µm to 150 µm; 120 µm to 170 µm; 150 µm to 300 µm; 200 µm to 300 µm; or 150 µm to 190 µm.

In addition, as a positive electrode current collector of the positive electrode, one having high conductivity without causing chemical changes in the battery may be used. For example, as the positive electrode current collector, a thin plate or a film including stainless steel, aluminum, nickel, titanium, calcined carbon, or the like may be used, and when including aluminum or stainless steel, one surface-treated with carbon, nickel, titanium, silver, or the like may also be used. An average thickness of the current collector may be appropriately applied in a range of 3 µm to 500 µm in consideration of conductivity and total thickness of a manufactured positive electrode.

The separator interposed between a positive electrode and a negative electrode of the lithium secondary battery is an insulating thin film having high ion permeability and mechanical strength, and is not particularly limited as long as it is commonly used in the art. Specifically, the separator may include one or more polymer of chemical resistant and hydrophobic polypropylene; polyethylene; and polyethylene-propylene copolymer. The separator may have a form of a porous polymer substrate such as a sheet or nonwoven fabric including the above-described polymer, and in some cases, may have a form of a composite separator in which organic or inorganic particles are coated on the porous polymer substrate by an organic binder. In addition, the separator may have an average diameter of pores of 0.01 µm to 10 µm and an average thickness of 5 µm to 300 µm.

Meanwhile, like a positive electrode, the negative electrode includes a negative electrode active layer including a negative electrode active material on at least one surface of a negative electrode current collector.

In this case, as the negative electrode active material, a material capable of reversibly intercalating/deintercalating lithium ions, lithium metal, an alloy of lithium metal, a material capable of doping and dedoping lithium, a transition metal oxide, or a combination thereof may be used.

Examples of a material capable of reversibly intercalating/deintercalating lithium ions include carbon materials, that is, carbon-based negative electrode active materials commonly used in lithium secondary batteries. Representative examples of the carbon-based negative electrode active material include crystalline carbon, amorphous carbon, or a combination thereof. Examples of the crystalline carbon include graphite such as amorphous-form, platelike, flake, spherical, or fibrous natural graphite or artificial graphite, and examples of amorphous carbon include soft carbon or hard carbon, mesophase pitch carbide, calcined coke, and the like.

As an alloy of lithium metal, an alloy of lithium and a metal selected from Na, K, Rb, Cs, Fr, Be, Mg, Ca, Sr, Si, Sb, Pb, In, Zn, Ba, Ra, Ge, Al, Sn, and the like may be used.

As a material capable of doping and dedoping lithium, silicon-based materials, for example, Si, SiOₓ (0<x<2), Si-Q alloy (wherein Q is an element selected from the group consisting of alkali metals, alkaline earth metals, Group 13 elements, Group 14 elements, Group 15 elements, Group 16 elements, rare earth elements, and combinations thereof, and is not Si), Si-carbon composite, Sn, SnO₂, Sn-R (wherein R is an element selected from alkali metals, alkaline earth metals, Group 13 elements, Group 14 elements, Group 15 elements, Group 16 elements, rare earth elements, and combinations thereof, and is not Sn), Sn-carbon composite, or a combination thereof may be used, and at least one of these may be mixed with SiO₂ and used. As the elements Q and R, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof may be used.

As the transition metal oxide, lithium titanium oxide may be used.

In addition, the negative electrode active layer may selectively further include a conductive material, a binder, other additives, and the like together with a carbon-based negative electrode active material as a main component, as necessary.

The conductive material may include one or more of carbon black, acetylene black, Ketjen black, carbon nanotubes, carbon fibers, and the like, but is not limited thereto.

For example, the negative electrode active layer may contain carbon black, carbon nanotubes, carbon fibers, or the like alone or in combination as a conductive material.

The content of the conductive material may be 0.1 parts by weight to 10 parts by weight based on 100 parts by weight of an entire negative electrode active layer. Specifically, the conductive material may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight. The present disclosure can prevent deterioration of charge capacity due to an increase in resistance of a negative electrode due to a low content of a conductive material by controlling the content of a conductive material within the above range. In addition, the present disclosure can prevent a problem that charge capacity deteriorates due to a decrease in content of a negative electrode active material due to an excessive conductive material exceeding the above range or electrical resistance increases due to an increase in the loading amount of a negative electrode active layer.

The binder is a component that assists binding of a negative electrode active material and a conductive material and binding to a current collector, and may be appropriately applied within a range that does not deteriorate electrical properties of a negative electrode. For example, the binder may include one or more of vinylidene fluoride-hexafluoropropylene copolymer (PVDF-co-HFP), polyvinylidenefluoride (PVdF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluororubber.

The content of the binder may be 0.1 parts by weight to 10 parts by weight based on 100 parts by weight of the entire negative electrode active layer. Specifically, the binder may be 0.1 parts by weight to 8 parts by weight, 0.1 parts by weight to 5 parts by weight, 0.1 parts by weight to 3 parts by weight, or 2 parts by weight to 6 parts by weight. The present disclosure can prevent deterioration of adhesive force of an active layer due to a low content of a binder or deterioration of electrical properties of a negative electrode due to an excessive binder by controlling the content of a binder contained in a negative electrode active layer within the above range.

As a negative electrode current collector of the negative electrode, one having high conductivity without causing chemical changes in the battery may be used. For example, as the negative electrode current collector, a thin plate or a film including stainless steel, aluminum, nickel, titanium, calcined carbon, or the like may be used, and when including aluminum or stainless steel, one surface-treated with carbon, nickel, titanium, silver, or the like may also be used. In addition, an average thickness of the current collector may be appropriately applied in a range of 3 µm to 500 µm in consideration of conductivity and total thickness of a manufactured negative electrode.

Furthermore, the electrolyte composition may include a non-aqueous organic solvent, lithium salt, an electrolyte additive, and the like.

The non-aqueous organic solvent may be applied without particular limitation as long as it is used in a non-aqueous electrolyte in the art. For example, as the non-aqueous organic solvent, aprotic organic solvents such as N-methyl-2-pyrrolidinone, ethylene carbonate (EC), propylene carbonate (PC), butylene carbonate, dimethyl carbonate (DMC), diethyl carbonate (DEC), gamma-butyrolactone, 1,2-dimethoxy ethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, sulfolane, methyl sulfolane, 1,3-dimethyl-2-imidazolidinone, ether, methyl propionate (MP), ethyl propionate (EP), propyl propionate (PP), and the like may be used.

The non-aqueous organic solvent used in the present disclosure may be used alone, or two or more types may be mixed and used in any combination or ratio according to a purpose. Among these, from a viewpoint of electrochemical stability against oxidation-reduction and chemical stability regarding heat or solute reaction, it is preferable that propylene carbonate, ethylene carbonate, fluoroethylene carbonate, diethyl carbonate, dimethyl carbonate, ethylmethyl carbonate, and the like are mixed.

Lithium salt may be applied without particular limitation as long as it is used in a non-aqueous electrolyte in the art. Specifically, the lithium salt may include one or more of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

A lower limit of an appropriate concentration range for appropriately using the lithium salt is 0.5 mol/L or more, specifically 0.7 mol/L or more, more specifically 0.9 mol/L or more, and an upper limit is 2.5 mol/L or less, specifically 2.0 mol/L or less, more specifically 1.5 mol/L or less. When the concentration of the lithium salt is less than 0.5 mol/L, ionic conductivity may decrease, which may deteriorate cycle characteristics and output characteristics of a non-aqueous electrolyte battery. In addition, when the concentration of the lithium salt exceeds 2.5 mol/L, viscosity of an electrolyte for a non-aqueous electrolyte battery increases, which may also decrease ionic conductivity, and may deteriorate cycle characteristics and output characteristics of a non-aqueous electrolyte battery.

In addition, when a large amount of lithium salt is dissolved in a non-aqueous organic solvent at once, the temperature of an electrolyte may increase due to heat of dissolution of lithium salt. When a temperature of a non-aqueous organic solvent increases significantly due to heat of dissolution of lithium salt, in a case of lithium salt containing fluorine, decomposition may be promoted and hydrogen fluoride (HF) may be generated. Since hydrogen fluoride (HF) causes deterioration of battery performance, it is not preferable. Therefore, the temperature when dissolving the lithium salt in a non-aqueous organic solvent is not particularly limited, but may be adjusted to -20°C to 80°C, and specifically, may be adjusted to 0°C to 60°C.

Furthermore, the electrolyte additive may be included as an additional auxiliary component to improve physical properties of an electrolyte composition. Electrolyte additives generally used in a non-aqueous electrolyte of the present disclosure may be added in any ratio. Specifically, compounds have an overcharge prevention effect, a negative electrode film formation effect, and a positive electrode protection effect, such as cyclohexylbenzene, biphenyl, t-butylbenzene, carbonate, vinylethylene carbonate, difluoroanisole, fluoroethylene carbonate, propane sultone, succinonitrile, dimethylvinylene carbonate, and the like may be used. In addition, as in the case of being used in a non-aqueous electrolyte battery called a lithium polymer battery, an electrolyte for a non-aqueous electrolyte battery may be pseudo-solidified by a gelling agent or a crosslinking polymer and used.

Hereinafter, the present disclosure will be described in more detail by examples and comparative examples.

However, the following examples and comparative examples are merely to illustrate the present disclosure, and content of the present disclosure is not limited to the following examples and comparative examples.

### Examples and Comparative Examples. Manufacturing of Lithium Secondary Battery

LiFePO₄ and Li₅FeO₄ were prepared as a positive electrode active material and a positive electrode additive, respectively. A positive electrode including a positive electrode active layer was manufactured on an aluminum thin plate (average thickness: 10 µm) using a positive electrode slurry including 95 wt.% of LiFePO₄, 1 wt.% of Li₅FeO₄, 2 wt.% of carbon-based black as a conductive material, and 2 wt.% of polyvinylidenefluoride as a binder.

Separately, a negative electrode including a negative electrode active layer was manufactured on a copper thin plate (average thickness: 12 µm) using a negative electrode slurry including 97 wt.% of artificial graphite as a carbon-based negative electrode active material and 3 wt.% of carboxymethyl cellulose (CMC) and styrene butadiene rubber (SBR) mixed in a 1:1 weight ratio as a binder.

An electrode assembly was manufactured by alternately disposing 9 prepared positive electrodes and 10 negative electrodes with an 18 µm polyethylene porous separator interposed therebetween. The manufactured electrode assembly was inserted into a battery case, and an electrolyte composition was injected to manufacture a small pouch-type lithium secondary battery.

Here, as the electrolyte composition, one prepared by dissolving LiPF₆ to 1 M in an organic solvent in which ethylene carbonate (EC), dimethyl carbonate (DMC), and ethylmethyl carbonate (EMC) were mixed in a volume ratio of 3:4:3 was used.

In addition, as shown in FIG. 2, the battery case 10 was molded to include a first accommodating portion 11 in which an electrode assembly 20 is accommodated, a second accommodating portion 12 in which a gas adsorbent 14 is disposed, and a sealing portion 13 located at outer peripheries of the first accommodating portion and the second accommodating portion to seal the interior. In this case, the sealing portion 13 had gas adsorbing films 17 and 19 attached to a terrace region of the first accommodating portion and an inner surface along a second direction sealing portion.

In addition, Zn-ZIF-8 and Cu-BTC (specifically, Cu₃(BTC)₂) were prepared as oxygen adsorbing metal-organic framework compounds, and Zn-MOF-5 and Cu-MOF-74 were prepared as hydrocarbon adsorbing metal-organic framework compounds. The first gas adsorbing material and the second gas adsorbing material were manufactured by controlling types and contents (wt.%:wt.%) of the prepared metal-organic framework compounds as shown in Table 1 below. Gas adsorbent 14 and gas adsorbing films 17 and 19 were manufactured using each of the manufactured first gas adsorbing material and second gas adsorbing material, respectively.

In this case, the gas adsorbent was used to include a first gas adsorbing material and an ethylene-propylene copolymer in a weight ratio of 80:20, and the gas adsorbing film (average thickness: 250±50 µm) was used to include a second gas adsorbing material and an ethylene-propylene copolymer in a weight ratio of 40:60.

**[Table 1]**

| | ① First gas adsorbing material | | Second gas adsorbing material | |
|---|---|---|---|---|
| | Type | Content | Type | Content |
| Example 1 | Zn-ZIF-8 | 100 | Zn-MOF-5 | 100 |
| Example 2 | Zn-MOF-5 and Zn-ZIF-8 | 10:90 | Zn-MOF-5 and Zn-ZIF-8 | 10:90 |
| Example 3 | Zn-MOF-5 and Zn-ZIF-8 | 40:60 | Zn-MOF-5 and Zn-ZIF-8 | 60:40 |
| Example 4 | Zn-MOF-5 and Zn-ZIF-8 | 60:40 | Zn-MOF-5 and Zn-ZIF-8 | 40:60 |
| Example 5 | Cu-MOF-74 and Cu-BTC | 40:60 | Cu-MOF-74 and Cu-BTC | 60:40 |
| Example 6 | Zn-MOF-5 and Cu-BTC | 40:60 | Zn-MOF-5 and Cu-BTC | 40:60 |
| Example 7 | Cu-MOF-74 and Zn-ZIF-8 | 40:60 | Cu-MOF-74 and Zn-ZIF-8 | 40:60 |
| Comparative Example 1 | - | - | - | - |
| Comparative Example 2 | Zn-MOF-5 and Zn-ZIF-8 | 40:60 | - | - |
| Comparative Example 3 | - | - | Zn-MOF-5 and Zn-ZIF-8 | 40:60 |

### Experimental Example.

Gas adsorption performance of a battery case according to the present disclosure was evaluated.

Specifically, the thickness of a first accommodating portion of each lithium secondary battery manufactured in Examples and Comparative Examples was measured first. Thereafter, each lithium secondary battery was pre-aged at room temperature (22±2°C) for 2 days, and then charged at 0.1C until reaching a state of charge (SOC) of 30% for activation. Thereafter, each activated lithium secondary battery was aged at room temperature (22±2°C) and 60°C for 1 day each, and a thickness of a first accommodating portion of each lithium secondary battery was measured second. The thickness change rate of a second measured first accommodating portion was calculated based on the thickness of a first measured first accommodating portion. It was determined that as the calculated thickness change rate was smaller, the gas adsorption rate generated during activation was higher.

In addition, a total of 300 cycles of charging and discharging were performed on each activated lithium secondary battery, and the thickness of the first accommodating portion of each lithium secondary battery was measured third. In this case, the charging and discharging were set as 1 cycle by charging under constant current/constant voltage conditions of 2.0C and 3.65V and 0.05C cut-off at 45±2°C, and discharging under constant current conditions of 0.5C and 2.5V cut-off.

The thickness change rate of a third measured first accommodating portion was calculated based on the thickness of a first measured first accommodating portion. It was determined that as the calculated thickness change rate was smaller, the gas adsorption rate generated during charging and discharging after activation was higher. The calculated results are shown in Table 2 below.

**[Table 2]**

| | Thickness change rate during activation process | Thickness change rate during charging and discharging process after activation |
|---|---|---|
| Example 1 | approximately 112% | approximately 164% |
| Example 2 | approximately 104% | approximately 155% |
| Example 3 | approximately 107% | approximately 158% |
| Example 4 | approximately 115% | approximately 177% |
| Example 5 | approximately 110% | approximately 163% |
| Example 6 | approximately 109% | approximately 160% |
| Example 7 | approximately 109% | approximately 161% |
| Comparative Example 1 | approximately 138% | approximately 380% |
| Comparative Example 2 | approximately 105% | approximately 290% |
| Comparative Example 3 | approximately 118% | approximately 245% |

As shown in Table 2 above, a lithium secondary battery according to the present disclosure had a volume change rate generated during an activation process of 115% or less, and a volume change rate generated during a charging and discharging process after activation of 200% or less.

This means that by providing a gas adsorbing film and a gas adsorbent including a metal-organic framework compound inside a battery case of the lithium secondary battery, gas generated inside during activation and during charging and discharging after activation can be effectively removed.

From these results, it can be seen that a secondary battery including a battery case of the present disclosure has excellent lifespan characteristics and safety.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**[Description of Reference Numerals]**

| | | | |
|---|---|---|---|
| 10: | battery case | | |
| 11: | first accommodating portion | 12: | second accommodating portion |
| 13: | sealing portion | 13a: | first direction sealing portion |
| 13b: | second direction sealing portion | 14: | gas adsorbent |
| 15: | folding line | 16: | cutting line |
| 17: | gas adsorbing film provided in terrace region | | |
| 18: | venting hole | | |
| 19: | gas adsorbing film provided along central region of second direction sealing portion | | |
| 20: | electrode assembly | | |
| 21: | electrode lead | 21a: | positive electrode lead |
| 21b: | negative electrode lead | | |
| 22: | electrode lead film | 22a: | positive electrode lead film |
| 22b: | negative electrode lead film | | |
| 100: | secondary battery | | |
| 111: | first accommodating portion of battery case | | |
| 113a: | first direction sealing portion of battery case | | |
| 117: | gas adsorbing film | 120: | electrode assembly |
| 121: | electrode lead | 122: | electrode lead film |

## Claims

1. A battery case, comprising:
a first accommodating portion for accommodating an electrode assembly;
a second accommodating portion in which a gas adsorbent comprising a first gas adsorbing material is disposed; and
a sealing portion located at outer peripheries of the first accommodating portion and the second accommodating portion to seal the interior,
wherein the first accommodating portion comprises a gas adsorbing film provided on an inner surface along the sealing portion,
wherein the gas adsorbing film comprising a second gas adsorbing material, and
wherein the first gas adsorbing material and the second gas adsorbing material each comprise a metal-organic framework compound.

2. The battery case of claim 1, wherein the sealing portion is divided into a first direction sealing portion through which an electrode lead bonded to an electrode assembly passes, and a second direction sealing portion perpendicular to the first direction sealing portion, and wherein the gas adsorbing film is located in a terrace region of the first accommodating portion along the first direction sealing portion.

3. The battery case of claim 1, wherein the sealing portion is divided into a first direction sealing portion through which an electrode lead bonded to an electrode assembly passes, and a second direction sealing portion perpendicular to the first direction sealing portion, and
wherein the gas adsorbing film is located on an inner surface of the first accommodating portion along the second direction sealing portion.

4. The battery case of claim 3, wherein at least one venting hole is provided in the second direction sealing portion, and
wherein the venting hole is located in a central region of the second direction sealing portion.

5. The battery case of claim 1, wherein the first gas adsorbing material and the second gas adsorbing material are each a metal-organic framework compound comprising one or more metal of zinc (Zn), silver (Ag), cobalt (Co), copper (Cu), nickel (Ni), magnesium (Mg), zirconium (Zr), molybdenum (Mo), and iron (Fe).

6. The battery case of claim 1, wherein the first gas adsorbing material and the second gas adsorbing material each comprise one or more metal-organic framework compound of Zn-MOF-5, Co-MOF-74, Fe-MOF-74, Ni-MOF-74, Mg-MOF-74, Zn-MOF-177, Mg-MOF-177, Zn-ZIF-8, ZnDABCO, Fe-ncb-ABDC, Cu(Qc)₂, Al-BTC, Cr-BTC, and Cu-BTC.

7. The battery case of claim 1, wherein the first gas adsorbing material and the second gas adsorbing material each comprise:
an oxygen adsorbing metal-organic framework compound that adsorbs oxygen gas in a range of 1 mmol/g to 50 mmol/g under conditions of 25°C and 1 bar oxygen partial pressure, and
a hydrocarbon adsorbing metal-organic framework compound that adsorbs methane gas in a range of 1 mmol/g to 50 mmol/g under conditions of 25°C and 35 bar methane partial pressure.

8. The battery case of claim 7, wherein the first gas adsorbing material comprises 50 wt.% to 100 wt.% of an oxygen adsorbing metal-organic framework compound based on the total weight.

9. The battery case of claim 7, wherein the second gas adsorbing material comprises 50 wt.% to 100 wt.% of a hydrocarbon adsorbing metal-organic framework compound based on the total weight.

10. The battery case of claim 1, wherein the average thickness of the gas adsorbing film is in a range of 10 µm to 500 µm.

11. A secondary battery, comprising:
an electrode assembly comprising a positive electrode, a negative electrode, and a separator disposed between the positive electrode and the negative electrode;
an electrolyte composition impregnating the electrode assembly; and
the battery case according to claim 1 in which the electrode assembly and the electrolyte composition are accommodated.

12. The secondary battery of claim 11, wherein the positive electrode comprises a positive electrode active layer comprising a positive electrode active material and a positive electrode additive on at least one surface of a positive electrode current collector, and
the positive electrode additive comprises one or more compound represented by the following Chemical Formulas 1 to 3:
[Chemical Formula 1] LiₐM¹_{(1-b)}M²bO₄
[Chemical Formula 2] Li₂M³₍₁₋ₚ₎M⁴ₚO₂
[Chemical Formula 3] Li₂R_{q}
In Chemical Formulas 1 to 3,
wherein M¹ is Fe, Co, Mn, Zn, Al, or Ga,
wherein M² is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M¹ and M² comprise different metals,
wherein M³ is Ni or Cu,
wherein M⁴ is one or more metal of W, Cu, Fe, V, Cr, Ti, Zr, Zn, Co, Al, In, Ta, Y, La, Sr, Ga, Sc, Gd, Sm, Ca, Ce, Nb, Mg, B, and Mo, provided that M³ and M⁴ comprise different metals,
wherein R is O, S, or Se, and
wherein a, b, p, and q are 4≤a≤7, 0≤b≤0.5, 0≤p≤0.5, and 0.8≤q≤2.5, respectively.

13. The secondary battery of claim 11, wherein the positive electrode additive comprises one or more compound of Li₅FeO₄, Li₆MnO₄, Li₆CoO₄, Li₆ZnO₄, Li₅AlO₄, Li₅GaO₄, Li₂NiO₂, Li₂CuO₂, Li₂O, Li₂O₂, Li₂S, and Li₂Se.

14. The secondary battery of claim 11, wherein the positive electrode additive is included in an amount of 0.1 wt.% to 5 wt.% based on the total weight of the positive electrode active layer.

15. The secondary battery of claim 11, wherein the positive electrode active material comprises a lithium iron phosphate compound represented by the following Chemical Formula 4:
[Chemical Formula 4] LiFeᵣM⁵₍₁₋ᵣ₎XO₄
In Chemical Formula 4,
wherein M⁵ is one or more element of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
wherein X is one or more of P, Si, S, As, and Sb, and
wherein r is 0≤r≤0.5.
